# EUROPEAN PATENT APPLICATION

(11) **EP 0 957 569 A2**
(43) Date of publication of application: **17.11.1999**
(21) Application number: 99300121.3
(22) Date of filing: 07.01.1999
(51) Int. Cl.: H02M 7/60

(54) **Rotary inverter**

(30) Priority: 12.05.1998 KR 9817024; 22.05.1998 KR 9818589; 08.06.1998 KR 9821117; 08.06.1998 KR 9821118; 29.08.1998 KR 9835377
(71) Applicant: Samsung Electronics Co., Ltd., Suwon-city, Kyungki-do (KR)
(72) Inventor: Kim, Chul, Anyang-city, Kyungki-do (KR); Han, Yong-woon, Kunpo-city, Kyungki-do (KR); Jang, Seong-deog, Suwon-city, Kyungki-do (KR); Sung, Han-jun, Seoul (KR)
(74) Representative: Geary, Stuart Lloyd

(57) **Abstract**

A rotary inverter (100) comprises motor (110) and a commutator (130). As the commutator (130) is rotated by the motor (110), current supplies to one input brush (121) is alternately fed to two output brushes (122, 124). The current returns alternately also through the output brushes (122, 124) and is fed to another input brush (123). The output brushes (122, 124) have the primary winding 201 of a transformer (200) coupled between them.

## Description

The present invention relates to a rotary inverter.

An inverter is an apparatus for converting DC power into AC power. Usually a relay or a semiconductor device is provided in the inverter. Recently, thyristors have been most commonly employed.

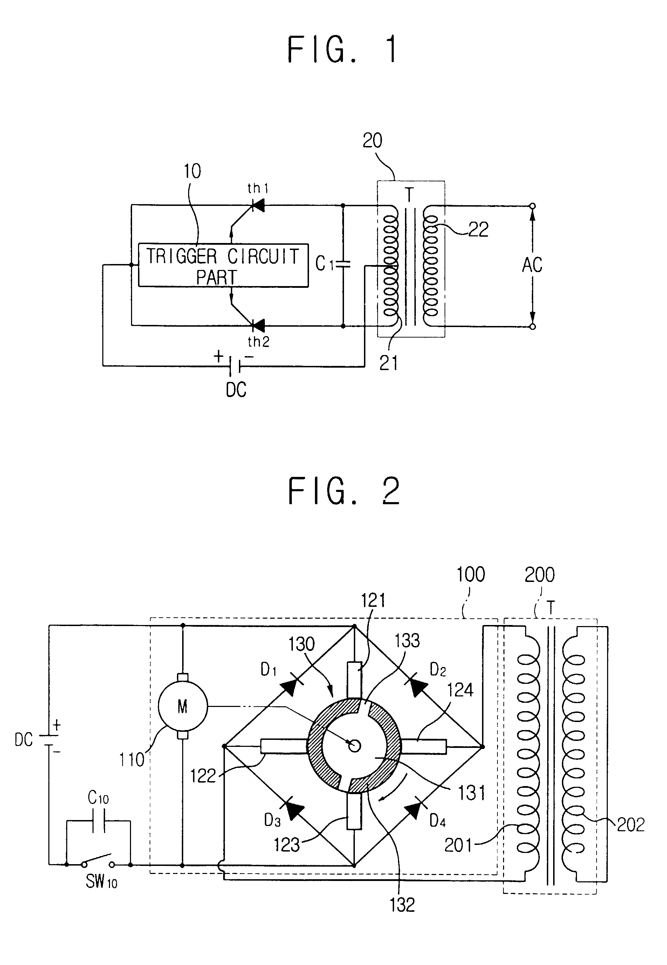

Figure 1 is a circuit diagram of a conventional inverter employing semiconductor devices. Referring to Figure 1, the circuit comprised of a DC power source, a trigger circuit 10, first and second thyristors th1, th2, a capacitor C1 and a transformer 20. The thyristors th1, th2 are switched on and off by a switching operation of the trigger circuit 10 so that current flows in alternate directions in the primary winding 21 of the transformer 20. Consequently, an AC current is generated in the secondary winding 22 of the transformer.

Such inverters are used in household electric appliances such as microwave ovens so that they can be used in the absence of mains power, e.g. outdoors, on a ship, in an aircraft or any other vehicles.

Microwave ovens are well known apparatuses for cooking food using microwaves. A microwave oven is typically provided with a high-voltage transformer and a magnetron. The high-voltage transformer serves to step up the AC power source supplied from the inverter to a high-voltage of about 2000V. The magnetron is driven by the high voltage and radiates microwaves of a desired frequency. The microwaves vibrate water molecules within food being cooked, thereby raising its temperature. However, there is a problem with this type of AC/DC microwave oven. Since it is necessary to provide a plurality of expensive semiconductor devices for the inverter in order to produce the desired high-voltage for the magnetron, the manufacturing cost is increased. In the above conventional AC/DC microwave oven, there is another problem in that the life span of a battery which supplies the DC power source is short, since the current demand of the semiconductor device is very high. In the above conventional AC/DC microwave oven, there is another problem that, since the semiconductor device generates excessive heat, energy loss is increased. In the above conventional AC/DC microwave oven, there is a further problem in that, since the size of the cooling fins is increased to cool the semiconductor device, the size of the microwave oven has also to be increased.

According to the present invention, there is provided a rotary inverter comprising a motor, a rotary commutator driven by the motor, an input brush for connection to one terminal of a dc power source and contacting the commutator, and a pair of output brushes contacting the commutator, wherein the commutator and brushes are configured such that a dc current supplied to the input brush is routed alternately to the output brushes during rotation of the commutator.

Preferably, the inverter will not be used with a centre-tapped transformer, in which case it is necessary for the returning current to be directed to the correct terminal of the dc power source. This may be achieved by including a further input brush for connection to the other terminal of a dc power source and contacting the commutator configuring it to receive current from the output brush to which the other input brush is not supplying current.

In order to produce high-frequency ac without running the motor at high-speed, the commutator may comprise first and second groups of conductive regions, the members of one group alternating with those of the other group and each member of each group being electrically connected to all other members of the same group.

Preferably, there is included a transformer whose primary winding is connected between the output brushes.

Further optional features of inverters embodying the present invention are set out in claims 5 to 25 appended hereto.

Embodiments of the present invention will now be described, by way of example, with reference to Figures 2 to 12 of the accompanying drawings, in which:-
Figure 1 is a circuit diagram of a conventional inverter employing semiconductor devices;
Figure 2 is a circuit diagram of a first rotary inverter according to the present invention;
Figures 3 and 4 are views illustrating the operation of the inverter of Figure 2;
Figure 5 is a view showing the current and voltage waveforms of the inverter's output;
Figure 6 is a schematic view showing the components of an inverter according to the present invention;
Figure 7 is a perspective view showing the transformer of Figure 6;
Figure 8 is a perspective view showing a microwave oven and an inverter according to the present invention;
Figure 9A is a side view of a commutator divided into two parts of a second embodiment of the present invention;
Figure 9B is an enlarged detail of the part "A" in Figure 9A;
Figure 10 is a exploded perspective view of a commutator divided into a plurality of parts of a third embodiment of the present invention;
Figure 11 is a view showing the operation of the commutator of Figure 10; and
Figure 12 is a schematic view showing the components of a fourth embodiment of the present invention.

Referring to Figure 2, a rotary inverter 100 comprises a commutator 130, brushes 121, 122, 123, 124, and a motor 110. Each of the brushes 121, 122, 123, 124 is in contact with the outer face of the commutator 130. The commutator 130 is rotated by the motor 110. The rotary inverter 100 converts DC power into AC power by the rotation of the commutator 130.

One pair of brushes 121, 123, which are opposite each other, are connected to the DC power source and the other pair of brushes 122, 124, which are opposite each other, are connected to the primary winding 201 of a transformer 200. Four diodes D1, D2, D3, D4 are provided for preventing backward current flow are connected between respective pairs of adjacent brushes 121, 122, 123, 124. The motor 110 is connected to the DC power source in parallel with one of the pairs of brushes 121, 123. DC power is supplied to that pair of brushes 121, 123 and the motor 110 through a power switch SW10. A capacitor C10 is connected in parallel with the power switch SW10.

The commutator 130 comprises a cylindrical body 131 and two conductive parts 132 which are formed on the outer surface of the cylindrical body 131. The conductive parts 132 are separated by non-conductive parts 133 which are wider than the brushes 121, 122, 123, 124. The transformer 200 receives AC power from the inverter 100 and steps it up or down to a desired voltage. This AC power can be directly supplied to a household electric appliance such as a microwave oven.

The transformer 200 is provided with a secondary winding 202 along with the primary winding 201. The primary winding 201 is wound on an input part of the transformer 200 and receives AC power from the rotary inverter 100. The secondary winding 202 is wound on an output part of the transformer 200.

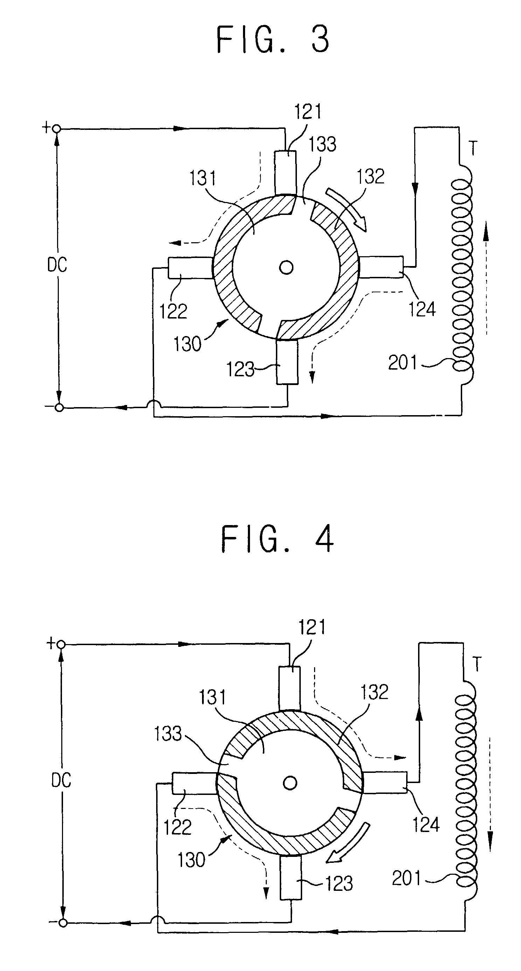

Referring to Figures 3, in a first configuration, current is received from a positive terminal of the DC power source at the upper brush 121 and flows through the one conductive part 132 of the commutator 132 and the left brush 122 to a lower terminal of the primary winding 201 of the transformer 200. The current flows up through the primary winding 201 to its upper terminal and then to the right brush 124 from where it passed through the other conductive part 132 and the lower brush 123 to a negative terminal of the DC power source.

Referring to Figure 4, in a second configuration after rotation of the commutator, current from the positive terminal of the DC power source is received by the upper brush 121 and flows through one conductive part 132 of the commutator 130 to the right brush 124 and then to the upper terminal of the primary winding 201 of the transformer 200. The current flows down through the primary winding 201 toward its lower terminal and from its lower terminal to the left brush 122, The current then flows through the other conductive part 132 to the bottom brush 123 and on to the negative terminal of the DC power source.

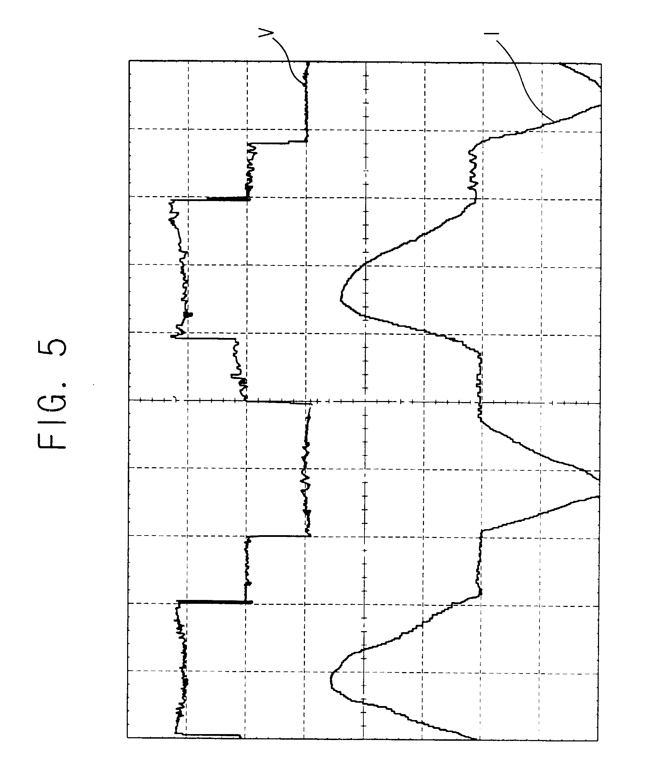

It can be seen that the direction of the current flowing through the primary winding reverses each time the commutator 131 rotates through 90°. The waveforms of the current (I) and the voltage (V) of this AC current, as viewed on a oscilloscope, are shown in Figure 5.

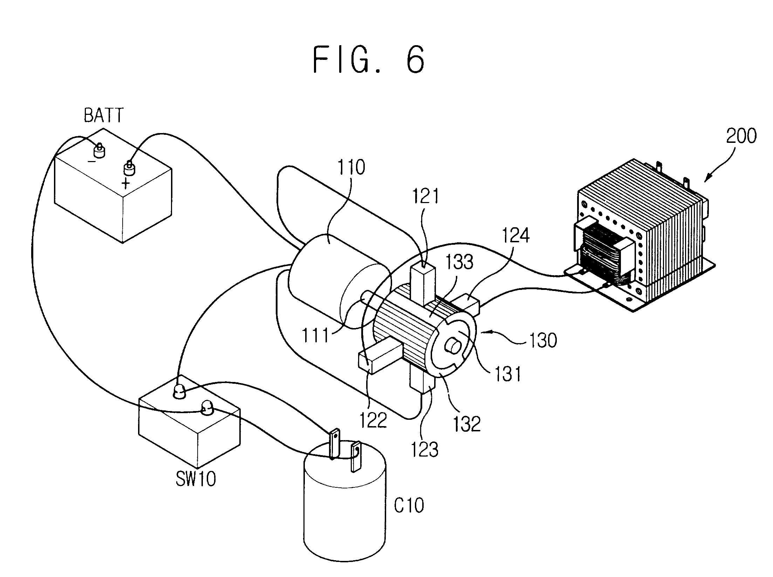

Referring to Figure 6, the commutator 130 is coupled to the shaft 111 of the motor 110 so as to be rotated by the motor 110. A 12V or 24V battery is employed as the DC power source.

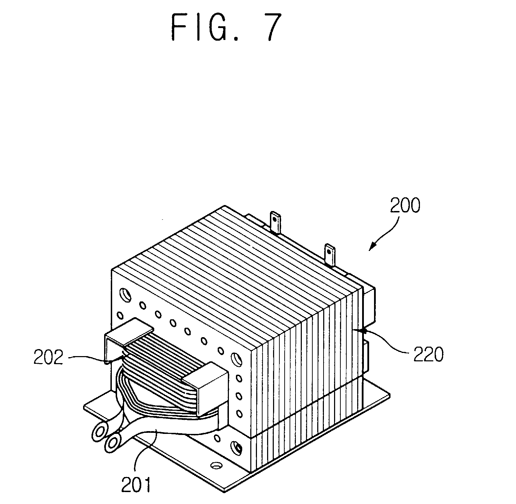

Referring to Figure 7, the transformer 200 comprises a core 210 denotes a core, a primary winding 201 and a secondary winding 202. The AC power from the rotary inverter 100 is applied to the primary coil 201. It is preferable that the primary coil 201 is a ribbon-type coil having a larger cross-sectional surface than a usual coil so that it can be operated to the range of about 50 to 1000Hz.

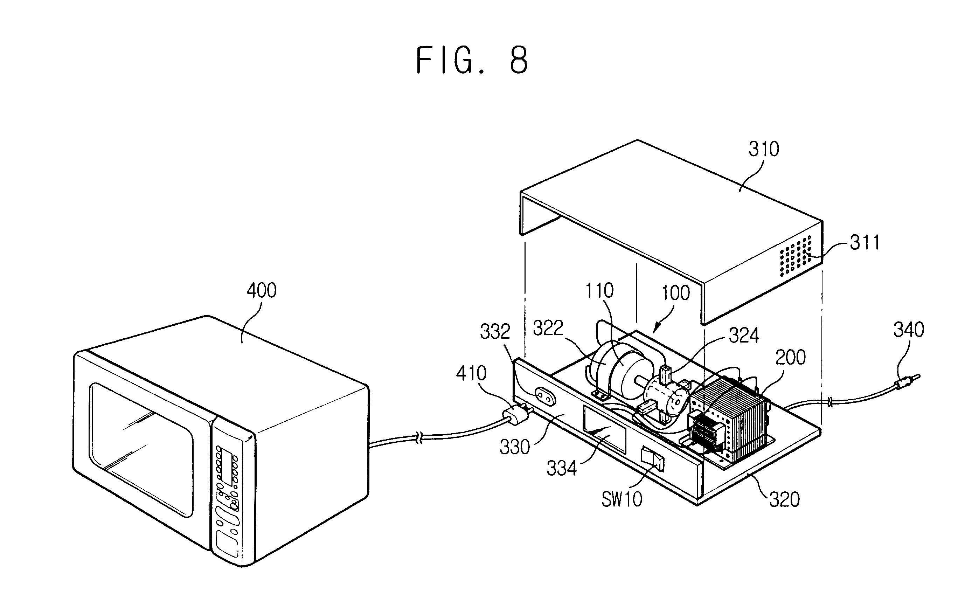

Referring to Figure 8, the rotary inverter 100 is mounted in a housing including a cover 310, a chassis 320, a front panel 330 and a jack plug 340 for connecting the inverter 100 to a source of DC power. The rotary inverter 100 and the transformer 200 are mounted on the chassis 320. In particular, the motor 110 is fixedly mounted on the chassis 320 by a bracket 322 and the brushes 121, 122, 123, 124, and the commutator 130 are fixedly mounted on the chassis 320 by a housing 324. A ventilation hole 311 is formed in the cover 310. An AC output terminal 332, a display 334 and the power switch SW10 are mounted to the front panel 330. The plug 410 of a microwave oven 400 is connected to the AC output terminal 332 so that AC power is supplied to the microwave oven 400.

The rotary inverter 100 receives DC power through the jack 340 from a vehicle battery (not shown). It should be noted that a battery could be housed with the inverter 100 in the housing.

The operation of the above-described rotary inverter will row be described with reference to Figures 2 to 8.

First, a household appliance to be used is connected to the rotary inverter 100. For example, as shown in Figure 8, the plug 410 of the microwave oven 400 is connected to the AC output terminal 332. In this situation, when the power switch SW10 is closed by a user, the DC power of 12V or 24V from the battery BATT is supplied through the power switch SW10 to the motor 110 and the upper brush 121 of the rotary inverter 100. The commutator 130 is rotated by the shaft 111 of the motor 110. The conductive parts 132 thus come into contact with the brushes 121, 122, 123, 124 in turn, whereby the DC power is converted into AC power. That is, the current from the DC power source supplied from the positive terminal of the battery BATT is inputted through the upper brush 121 (see Figure 3) to the commutator 130. The current thus flows through one conductive part 132 toward the left brush 122 and flows from the lower terminal of the primary winding 201 to its upper terminal. Then, the current is circulated through the right brush 124, the other conductive part 132 and the lower brush 123 to the negative terminal of the battery BATT.

When the commutator 131 has rotated by 90°, the DC current supplied from the positive terminal of the battery BATT is inputted through the upper brush 121, one conductive part 132 and the right brush 124, then from the upper terminal of the primary coil 201 to its lower terminal (see Figure 4). After that, the current is circulated through the left brush 122, the other conductive part 132 and the lower brush 123 to the negative terminal of the battery. Therefore, during each rotation (360°) of the motor 110, the current direction in the primary winding 201 of the transformer 200 switches direction four times, thereby generating the AC power of the desired frequency.

The frequency of the AC power in the primary winding 201 of the transformer 200 is determined by the rotation speed of the motor 110. The transformer 200 steps up the AC input voltage to an AC output voltage having a desired voltage proportional to the turns ratio of the transformer 200. The raised voltage is supplied to the household appliance so that it can be used even in the open-air, on a ship, in an aircraft or in any other vehicle where AC power is not available.

Since the number of the components is reduced, the manufacturing cost is lowered and, since semiconductor devices are not used, the wastage of current and the energy through generation of heat is also lowered. The size of the microwave oven is also decreased by removing the cooling fins.

A second embodiment will now be described.

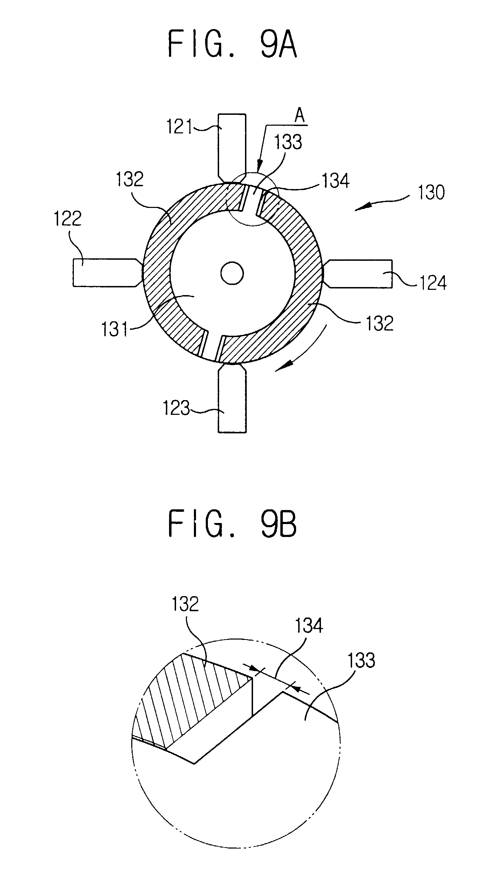

Referring to Figures 9A and 9B, the commutator 130 comprises a cylindrical body 131 and two conductive parts 132 which are formed on the outer surface of the cylindrical body 131 and separated by non-conductive parts 133. Non-conductive slots 134 are formed on each side of the non-conductive parts 133, separating them from the conductive parts 132. The non-conductive slots 134 have a width of about 0.1 - 1mm, preferably 0.4 - 0.7mm.

Further, the non-conductive parts 133 have a width which is greater than ends of the brushes 121, 122, 123, 124 or the same as the ends of the brushes 121, 122, 123, 124. Therefore, in every rotation (360°) of the motor 110, the current direction in the primary winding 201 of the transformer 200 is reversed four times by the conductive parts 132, thereby generating AC power of a desired frequency.

There is friction between the conductive and non-conductive parts 132, 133 of the commutator 130 and the brushes 121, 122, 123, 124. Since the conductive parts 132 are made of copper having excellent conductivity, the conductive parts 132 may expand into the non-conductive parts 133 as a result of frictional heating. If the conductive parts 132 do expand into the non-conductive parts 133, the conductive parts 132 will be shorted by the brushes 121, 122, 123, 124. However, since the non-conductive slots 134 are present, the conductive parts 132 are prevented from expanding into the non-conductive parts 133 due to frictional heating and consequently being shorted by the brushes 121, 122, 123, 124.

A third embodiment of the present invention will now be described.

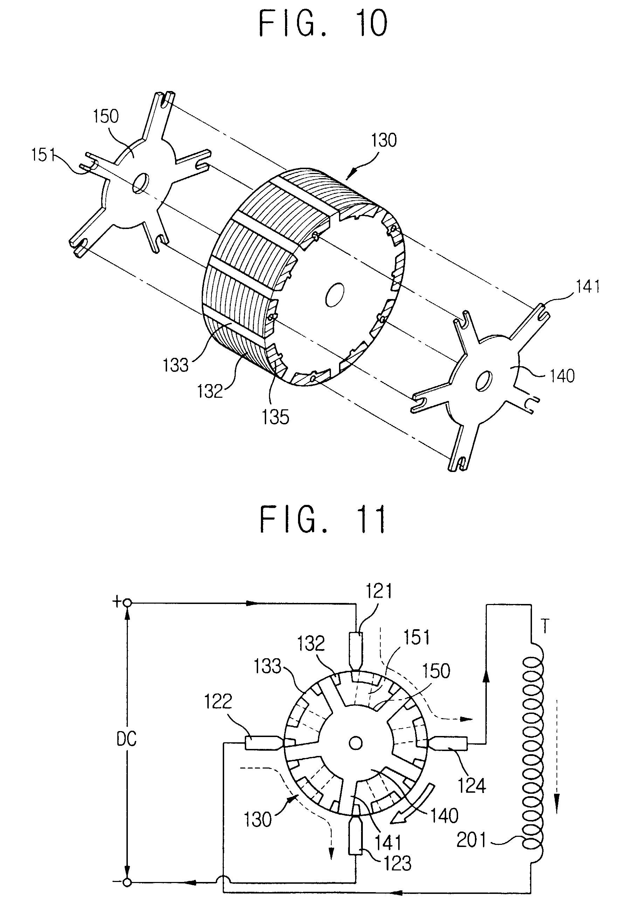

Referring to Figures 10 and 11, a commutator 130 comprises a cylindrical body 131 and an even number (e,g, 10) of conductive parts 132 which are formed on the outer surface of the cylindrical body 131. The conductive parts 132 are separated by non-conductive parts 133. Each of the conductive parts 132 has an extended portion 135 which is extended to one ends of the cylindrical body 131. The commutator 130 further comprises plates 140, 150 which are, respectively, fixed to the ends of the cylindrical body 131. Each plate 140, 150 is formed with a plurality of contacting pieces 141, 151 which extend radially from the outer circumference of the plates 140, 150 and which contact alternate extended portions 135. The plates 140, 150 are made of a conductive material. A non-conductive slots as in the second embodiment may be provided.. Further, the non-conductive parts 133 have a width which is greater than or equal to the width of the ends of the brushes 121, 122, 123, 124.

Referring to Figure 11, in first configuration, current from the positive terminal of the DC power source is supplied to the upper brush 121 and flows through one conductive part 132, along one of the contacting pieces 151, through one of the plates 150, along another of the contacting pieces 151 to another conductive part 132 and then to right brush 124. From the right brush 124, the current flows down through the primary winding 201 of the transformer 200 to the left brush 122. The current then flows through another conductive part 132, along one of the contacting pieces 152, through the other plate 150, along yet another of the contacting pieces 152 to another conductive part 132 and then to the bottom brush 123 from where it flows to the negative terminal of the DC power source.

When the commutator 130 has rotated somewhat, the arrangement of the contacting pieces 151 means that the current flows in the opposite direction through the primary winding 201 of the transformer 200. This reversal of current takes place ten times as the commutator 130 goes through one revolution.

The frequency of the AC current in the primary winding 201 of the transformer 200 is determined by the rotational speed of the motor 110. Therefore, in order to increase or decrease the frequency of the AC current, the rotational speed of the motor 110 has to be controlled. However, since the current direction in the primary winding 201 of the transformer 200 is changed ten times during every rotation (360°) of the motor 110, AC power of a higher frequency can be generated. Therefore, it is possible to generate AC power having a higher frequency without increasing the rotational speed of the motor 110 as compared with the above-described embodiments.

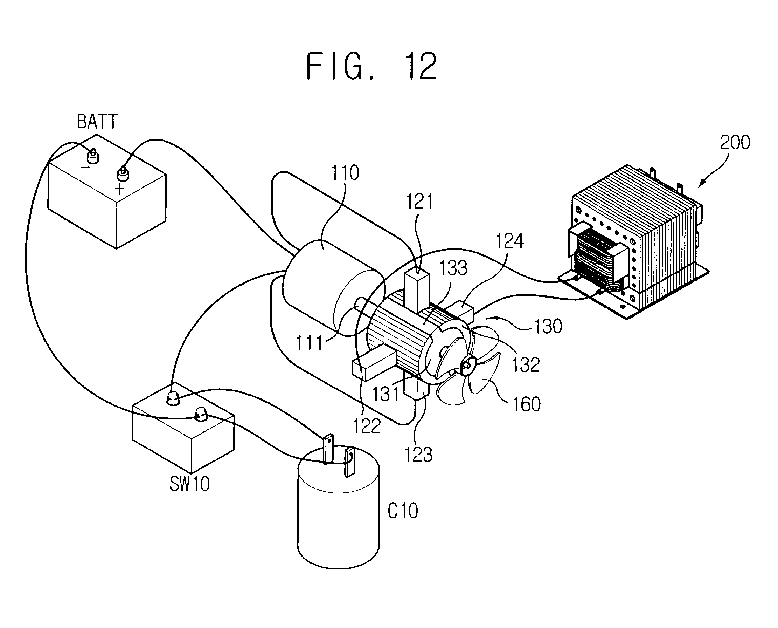

Referring to Figure 12, there is provided a motor 110 which is driven by the DC power source BATT and generates a rotational force, a cooling fan 160 rotated by the motor 110, and a commutator 130 rotated by the motor 110. The cooling fan 160 and the commutator 130 are coupled to the shaft 111 of the motor 110. Therefore, the commutator 130 is driven by the motor 110, thereby generating AC current. The cooling fan 160 is also driven by the motor 110, whereby the motor 110, the commutator 130 and the transformer 200 are cooled. Since the cooling fan 160 is driven by the shaft 11, a separate power source for the cooling fan 160 is not necessary, whereby the manufacturing cost and the wastage of current are lowered.

In the described inverters, since the number of constructive parts thereof may be reduced, the manufacturing cost is lowered.

Additionally, the life span of the battery which supplies the DC current can be much longer, since the semiconductor devices described in the prior art are not employed and the wastage of the current is very low. Furthermore, the energy lost as heat is decreased, since the semiconductor devices described in the prior art is not employed. Furthermore, since the cooling fins employed in the prior art can be removed, the size of the microwave oven can be smaller. Furthermore, the output frequency from the rotary inverter can be selectively controlled by the rotational speed of the motor and the number of the conductive parts. Furthermore, since the cooling fan is directly coupled to the shaft of the motor, the manufacturing cost and the wastage of current are lowered.

## Claims

1. A rotary inverter comprising a motor (110), a rotary commutator (130) driven by the motor (110), an input brush (121) for connection to one terminal of a dc power source and contacting the commutator (130), and a pair of output brushes (122, 124) contacting the commutator (130), wherein the commutator (130) and brushes (121, 122, 124) are configured such that a dc current supplied to the input brush (121) is routed alternately to the output brushes (122, 124) during rotation of the commutator (130).

2. A rotary inverter according to claim 1, including a further input brush (123) for connection to the other terminal of a dc power source and contacting the commutator (130), wherein the further input brush (123) is configured to receive current from the output brush (122, 124) to which the other input brush (121) is not supplying current.

3. A rotary inverter according to claim 2, wherein the commutator (130) comprises first and second groups of conductive regions (132), the members of one group alternating with those of the other group and each member of each group being electrically connected to all other members of the same group.

4. A rotary inverter according to claim 1, 2 or 3, including a transformer (200) whose primary winding (201) is connected between the output brushes (122, 124).

5. A rotatable inverter comprising:
a rotatable inverting means for inverting a DC power source to an AC power source by means of a rotational force; and
a transformer which receives the AC power source inverted by the rotatable inverting means and outputs a higher voltage.

6. A rotatable inverter as claimed in claim 5, wherein the rotatable inverting means comprises a motor generating the rotational force, a commutator driven by the motor and a plurality of brushes which are respectively contacted with an outer surface of the commutator.

7. A rotatable inverter as claimed in claim 6, wherein the commutator comprises a cylindrical body made of an insulating material, and conductive parts which are divided into an even-number by non-conductive parts, respectively, having a desired width, whereby two brushes, which are adjacent to each other, are simultaneously contacted with one side of the conductive parts.

8. A rotatable inverter as claimed in claim 7, wherein each of the non-conductive parts has a width which is wider than an end of the brush or which is the same as the end of the brush.

9. A rotatable inverter as claimed in claim 6, wherein the rotatable inverting means further comprises a power switch which connects or disconnects the DC power source with the motor and brushes.

10. A rotatable inverter as claimed in claim 9, wherein one pair of brushes which are opposite each other are connected through the power switch to the DC power source, and another pair of brushes which are opposite each other is connected to the side of the transformer.

11. A rotatable inverter as claimed in claim 10, wherein the motor is connected in parallel with the pair of brushes which is connected through the power switch to the DC power source.

12. A rotatable inverter as claimed in claim 9, wherein the power switch is connected in parallel with a condenser.

13. A rotatable inverter as claimed in claim 6, wherein between the respective brushes, which are adjacent to each other, is respectively connected diodes for preventing a backward voltage flow.

14. A rotatable inverter as claimed in claim 5, wherein the transformer comprises a primary coil to which the AC power source inverted by the rotatable inverting means is inputted, and a secondary coil which outputs the AC power source induced from the primary coil, the primary coil being made of a plate-type coil having a larger cross-sectional surface than that of an usual coil.

15. A rotatable inverter comprising: a motor which is driven by a DC power source and generates a rotational force;
a commutator which has a cylindrical body made of an insulating material, and conductive parts which are divided into two parts by non-conductive parts, respectively, having a desired width;
a plurality of brushes which are respectively contacted with the outer surface of the commutator, one pair of brushes, which are opposite each other, receiving the DC power source, and another pair of brushes, which are opposite each other, outputting the AC power source; and
a transformer which receives the AC power source from the brushes and outputs a higher voltage.

16. A rotatable inverter as claimed in claim 15, wherein each of the non-conductive parts has a non-conductive groove which is formed on at least one end of the non-conductive parts which are opposite to the conductive parts, the non-conductive groove having a predetermined width.

17. A rotatable inverter as claimed in claim 16, wherein each of the non-conductive parts has a width which is wider than an end of the brush or which is the same as the end of the brush.

18. A rotatable inverter comprising: a motor which is driven by a DC power source and generates a rotational force;
a commutator which has a cylindrical body made of an insulating material, and conductive parts which are divided into an even-number of parts by non-conductive parts, respectively, having a desired width, and plates which are, respectively, fixed to the side ends of the cylindrical body, each of the conductive parts having an extended portion which is extended to the side ends of the cylindrical body, and the extended portion having a predetermined length;
a plurality of brushes which are respectively contacted with the outer surface of the commutator, one pair of brushes, which are opposite each other, receiving the DC power source, and another pair of the brushes, which are opposite each other, outputting the AC power source; and
a transformer which receives the AC power source from the brushes and outputs a higher voltage.

19. A rotatable inverter as claimed in claim 18, wherein each plate is formed with a plurality of contacting pieces which are outwardly extended from the outer circumference of the plates and which are alternatively contacted with each extended portion.

20. A rotatable inverter as claimed in claim 19, wherein each of the plates is made of a conductive material.

21. A rotatable inverter as claimed in claim 18, wherein each of the non-conductive parts has a non-conductive groove which is formed on at least one end of the non-conductive parts which are opposite to the conductive parts, the non-conductive groove having a predetermined width.

22. A rotatable inverter as claimed in claim 21, wherein each of the non-conductive parts has a width which is wider than an end of the brushes, or which is the same as the end of the brush.

23. A rotatable inverter comprising;
a motor which is driven by the DC power source and generates a rotational force; a cooling fan rotated by the motor;
a commutator rotated by the motor;
a plurality of brushes which are respectively contacted with the outer surface of the commutator, one pair of the brushes, which are opposite each other, receiving the DC power source, and another pair of the brushes, which are opposite each other, outputting the AC power source; and
a transformer which receives the AC power source from the brushes and outputs a higher voltage.

24. A rotatable inverter as claimed in claim 23, wherein the commutator comprises a cylindrical body made of an insulating material, and conductive parts which are divided into an even-number by non-conductive parts, respectively, having a desired width, whereby two brushes, which are adjacent to each other, are simultaneously contacted with one side of the conductive parts.

25. A rotatable inverter claimed in claim 23, wherein the cooling fan is coupled to the motor along with the commutator.
